# FASCICULE DE BREVET EUROPEEN

(11) **EP 2 451 265 B1**
(45) Date de publication et mention de la délivrance du brevet: **10.09.2014**
(21) Numéro de dépôt: 10742197.6
(22) Date de dépôt: 05.07.2010
(51) Int. Cl.: A01D 43/10

(54) **FAUCHEUSE-CONDITIONNEUSE DE VÉGÉTAUX COMPORTANT UN DISPOSITIF DE RÉPARTITION HOMOGÈNE DES VÉGÉTAUX RENVOYÉS AU SOL**
MÄH- UND KONDITIONIERUNGSVORRICHTUNG MIT EINER ANORDNUNG ZUM HOMOGENEN VERTEILEN DER GRÄSER AUF DEM BODEN
MOWER-CONDITIONER WITH A DEVICE FOR THE HOMOGENOUS DISTRIBUTION OF VEGETATION ON THE GROUND

(30) Priorité: 08.07.2009 FR 0954712
(43) Date de publication de la demande: 16.05.2012
(73) Titulaire: KUHN S.A., 67700 Saverne (FR)
(72) Inventeur: WALCH, Martin, 67490 Dettwiller (FR); WATTRON, Bernard, 67700 Haegen (FR)
(74) Mandataire: Esch, Esther Evelyne
(86) Numéro de dépôt international: PCT/FR2010/051412
(87) Numéro de publication internationale: WO 2011/004110

(56) Documents cités:
- EP-A1- 0 258 930
- EP-A1- 1 927 278
- EP-A2- 0 524 131

## Description

L'invention concerne une faucheuse-conditionneuse de végétaux comportant un dispositif de répartition homogène des végétaux après la coupe lorsqu'ils sont renvoyés vers le sol.

La machine selon l'invention comporte un bâti qui porte un mécanisme faucheur pourvu d'un dispositif de coupe, un système de conditionnement des végétaux, et un tunnel guidant les végétaux vers l'arrière de la machine. L'ensemble est relié par un timon à un tracteur et est porté par deux roues placées aux extrémités latérales de la machine.

Une telle machine comporte des pièces qui doivent pouvoir se déplacer par rapport au bâti avec la barre de coupe afin que celle-ci puisse suivre les dénivellations du sol. La faucheuse-conditionneuse doit également disposer de moyens de relevage afin d'éviter les obstacles du terrain et permettre le transport de la machine sur routes et chemins en évitant le risque que les outils arrivent en contact avec le sol.

Outre le dispositif de relevage, la machine comporte également un carénage de protection solidaire du dispositif de coupe.

Sur les machines connues le carénage, la barre de coupe, le système de conditionnement et le tunnel de guidage des végétaux forment un ensemble rigide apte à se déplacer verticalement pour éviter les obstacles et pour le transport.

Cet ensemble rigide dans lequel tous les éléments sont solidarisés est tout à fait satisfaisant pour ce qui concerne le travail de la machine lors de la coupe. Toutefois des problèmes se produisent lors du conditionnement et de la dispersion des végétaux coupés lorsque l'ensemble est relevé, pour passer un obstacle par exemple. Dans cette situation, la direction d'éjection des végétaux varie en fonction du positionnement des outils et du tunnel, les végétaux coupés ne retombent alors pas en une couche homogène.

Par ailleurs, dans les machines connues, compte tenu du déplacement de l'ensemble rigide et notamment de la partie arrière lorsque les outils de coupe sont soulevés, il est nécessaire que le bâti soit positionné assez haut au-dessus du sol, ce placement n'est pas favorable pour la stabilité de la machine.

Une autre machine est connue du document EP 0 258 930 A1. Cette machine est conforme au préambule de la revendication 1. Sur cette machine, le tunnel d'éjection est articulé au bâti au moyen d'un dispositif configuré de telle sorte que l'ensemble du tunnel d'éjection peut se déplacer verticalement et parallèlement par rapport au sol. Il résulte de cet agencement que, pendant le travail de la machine, la partie arrière du tunnel d'éjection voit sa hauteur par rapport au sol varier de manière sensible. Cette variation conduit à ce que les végétaux coupés et guidés par le tunnel d'éjection, retombent sur le sol de manière non homogène.

L'invention a donc pour objectif de résoudre ces principales difficultés en proposant une faucheuse-conditionneuse comportant un carénage articulé avec le tunnel d'éjection des végétaux qui est lui-même articulé par rapport au bâti.

La présente invention concerne une machine faucheuse-conditionneuse comprenant un bâti portant un mécanisme faucheur de végétaux pourvu d'un dispositif de coupe, un système de conditionnement des végétaux et des moyens pour le relevage de ces éléments par rapport au bâti, cet ensemble étant muni d'un carénage, ladite machine qui comporte en outre un tunnel d'éjection des végétaux placé en continuité du système de conditionnement et lui-même articulé par rapport au bâti, est caractérisée en ce que le carénage est articulé avec le tunnel d'éjection au moyen d'un axe transversal qui est positionné en arrière du système de conditionnement.

La faucheuse-conditionneuse selon l'invention présente plusieurs avantages essentiels :
- en raison des articulations réalisées le tunnel d'éjection reste positionné de manière sensiblement identique quelle que soit la position de la barre de coupe, c'est-à-dire que la machine soit en position de travail basse ou en position relevée pour passer un obstacle, de fait la répartition des végétaux éjectés par la machine sur le sol est toujours homogène,
- du fait de cette position stable de la partie arrière, le bâti peut être positionné plus bas par rapport au sol, ce qui confère à la machine une plus grande stabilité, laquelle est particulièrement appréciable lorsque la machine travaille à flanc de colline, par exemple.

D'autres caractéristiques et avantages de l'invention se dégageront de la description qui va suivre en regard des dessins annexés qui ne sont donnés qu'à titre d'exemples non limitatifs. Dans ces dessins :
La figure 1 montre une vue de dessus de la faucheuse-conditionneuse.
La figure 2 représente une vue en perspective de l'arrière de la machine.
La figure 3 illustre la machine selon l'invention en une vue de côté, la barre de coupe étant en position de travail basse.
La figure 4 illustre la machine en une vue de côté, la barre de coupe étant en position relevée, par exemple pour passer une importante bosse du terrain.
La figure 5 représente une coupe selon un plan médian longitudinal de la machine de la figure 3.
La figure 6 représente une coupe selon un plan médian longitudinal de la machine de la figure 4.

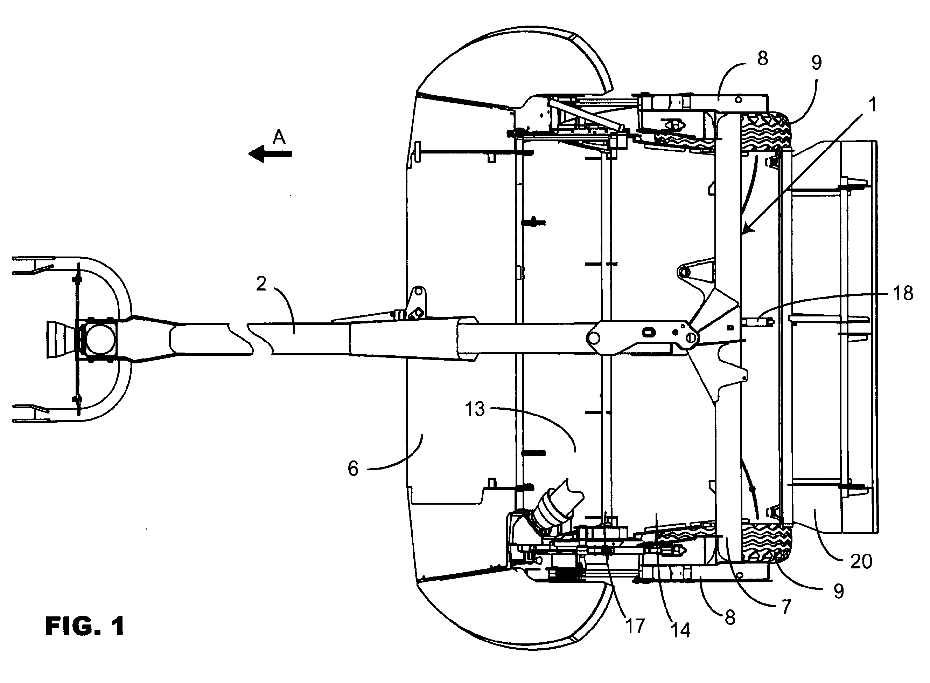

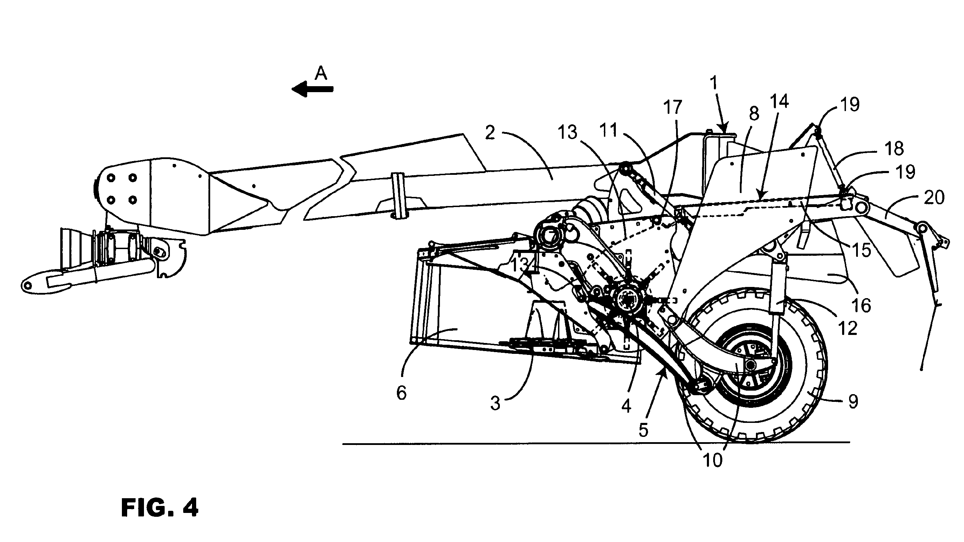

Telle qu'elle est illustrée sur les figures 1 à 6, la faucheuse-conditionneuse selon l'invention comporte un bâti (1) portant un mécanisme faucheur pourvu d'un dispositif de coupe (3), un système de conditionnement (4) des végétaux et des moyens (5) pour le relevage de ces éléments par rapport au sol.

La machine est reliée à un tracteur qui permet de la déplacer dans une direction de déplacement (A) et de l'animer, par l'intermédiaire d'un timon (2) comportant à son extrémité avant un dispositif d'attache connu dans le domaine des machines agricoles.

Afin d'assurer la sécurité de la machine par rapport à l'ensemble constitué par les éléments de travail en rotation rapide, la faucheuse-conditionneuse comporte un capot (6) qui entoure toute la partie avant de la machine.

Les différentes pièces de la machine sont portées par le bâti (1) formant l'ossature et supportant les éléments de travail, les actionneurs et les protections. Le bâti (1) comporte notamment une poutre transversale (7) fixée au timon (2), deux supports latéraux (8) et différentes pièces de structure, les supports latéraux (8) portant des roues (9) qui supportent le poids de la machine.

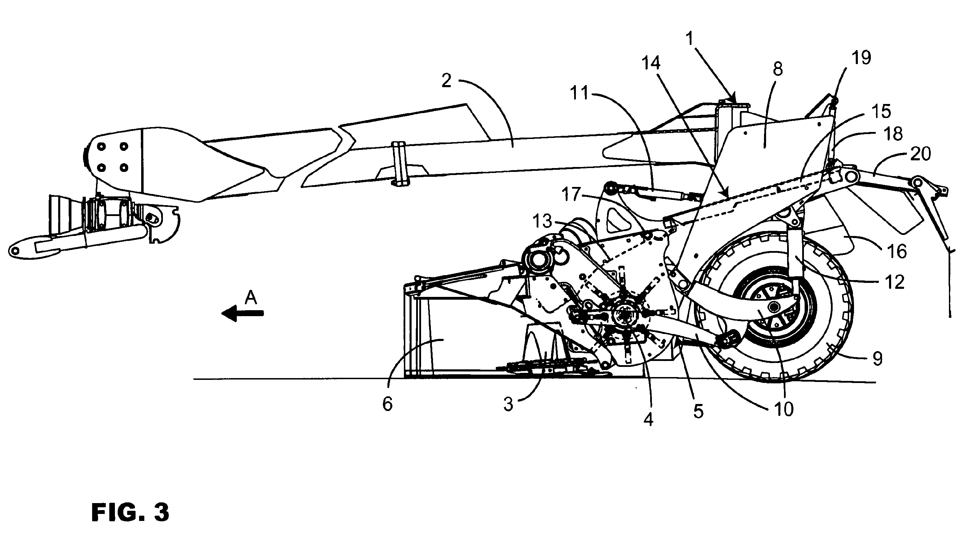

Les éléments de travail, essentiellement la barre de coupe (3) et le système de conditionnement (4) représentés sur les différentes figures 3 à 6, sont reliés au bâti (1) par des moyens de levage (5) constitués par des leviers (10 et 11) leur permettant de se déplacer en hauteur. A cet effet, ces leviers (10 et 11) sont articulés à la fois sur le bâti (1) et sur lesdits éléments de travail. De plus, des vérins hydrauliques (12) disposés entre le bâti (1) et les leviers (10) assurent la descente de ces éléments vers le sol dans la position de travail dans laquelle les éléments de coupe sont parallèles au sol, et leur relevage, pour passer un obstacle du terrain par exemple et pour être amenés dans la position de transport.

La barre de coupe (3) de la partie faucheuse peut comporter de manière connue des disques agencés sur un support, les uns à côté des autres, et qui sont entraînés en rotation rapide dans un plan parallèle au sol, de manière à couper les végétaux.

Après la coupe, les végétaux sont happés par le système de conditionnement (4) qui peut se présenter, par exemple, sous forme d'un tambour entraîné en rotation muni de fléaux qui reprennent le fourrage coupé. Ce tambour est partiellement entouré par un carénage (13) qui débute à l'avant au-dessus de la barre de coupe (3) où il se raccorde au capot (6). Les végétaux sont alors traités pour accélérer le séchage et sont ensuite projetés dans le tunnel d'éjection (14) afin d'être rejetés vers l'arrière de la machine sur le sol.

Le tunnel d'éjection (14) s'étend vers l'arrière de la machine au-delà des roues (9). Il est constitué par une partie supérieure (15) et de deux plaques latérales (16). Ces plaques latérales sont placées dans des plans orientés dans la direction d'avancement (A) et, vers l'intérieur de la machine par rapport aux roues (9). Selon l'invention, le tunnel d'éjection (14) des végétaux s'étend en continuité avec le système de conditionnement (4) et est articulé avec le carénage (13) de la partie avant de la machine, lequel carénage (13) est solidaire des outils de travail (3 et 4) dans le déplacement en relevage ou en descente vers la position de fonctionnement.

Ainsi, selon l'invention l'articulation entre le carénage (13) et le tunnel d'éjection (14) est réalisée au moyen d'un axe transversal (17) reliant les deux parties.

Du fait de cette articulation, l'ensemble de travail ne forme pas un bloc compact avec le tunnel d'éjection (14). Le déplacement de l'ensemble de travail se traduit essentiellement par un déplacement de l'extrémité avant du tunnel d'éjection (14) autour de l'axe transversal (17).

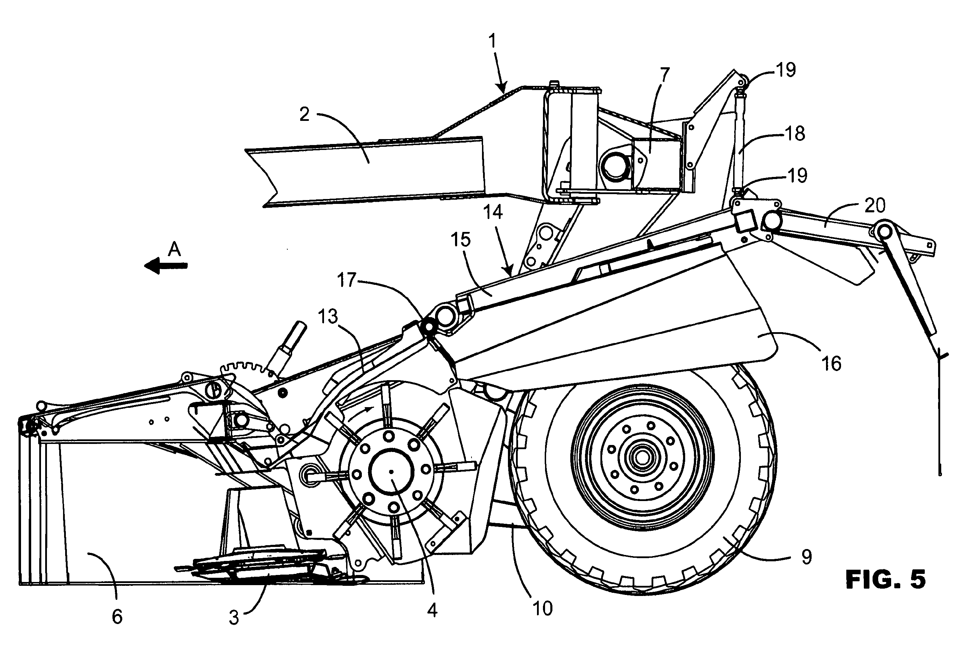

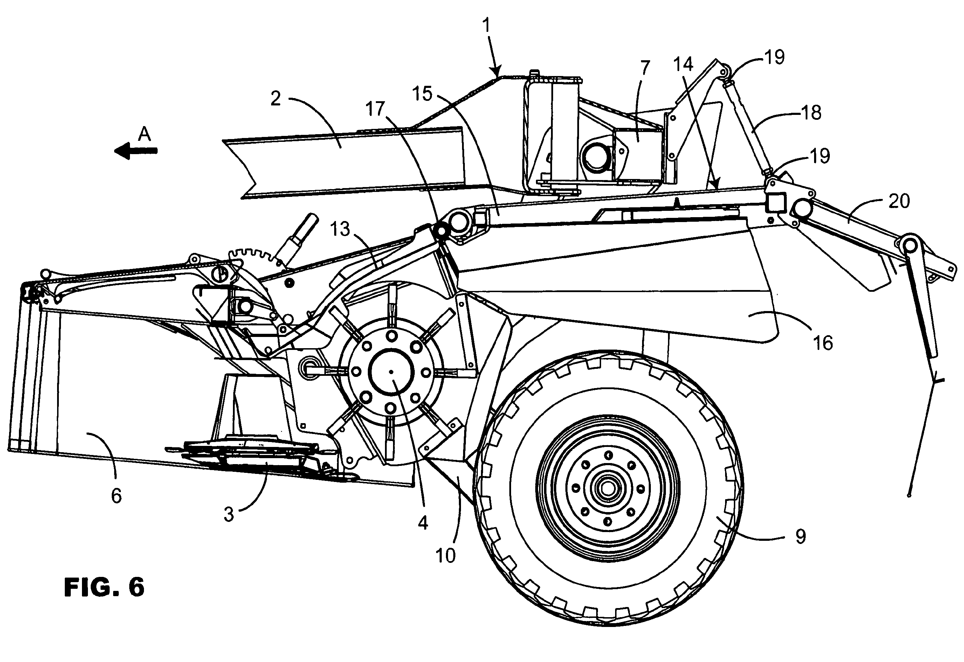

Tel que cela est illustré sur les figures 5 et 6, l'axe transversal (17) est positionné dans la machine au-dessus et légèrement en arrière du système de conditionnement (4) des végétaux, au niveau de l'entrée du tunnel d'éjection (14) et dans sa partie supérieure.

Avantageusement selon l'invention la dimension de l'axe transversal (17) correspond sensiblement à la largeur de la machine entre les roues (9).

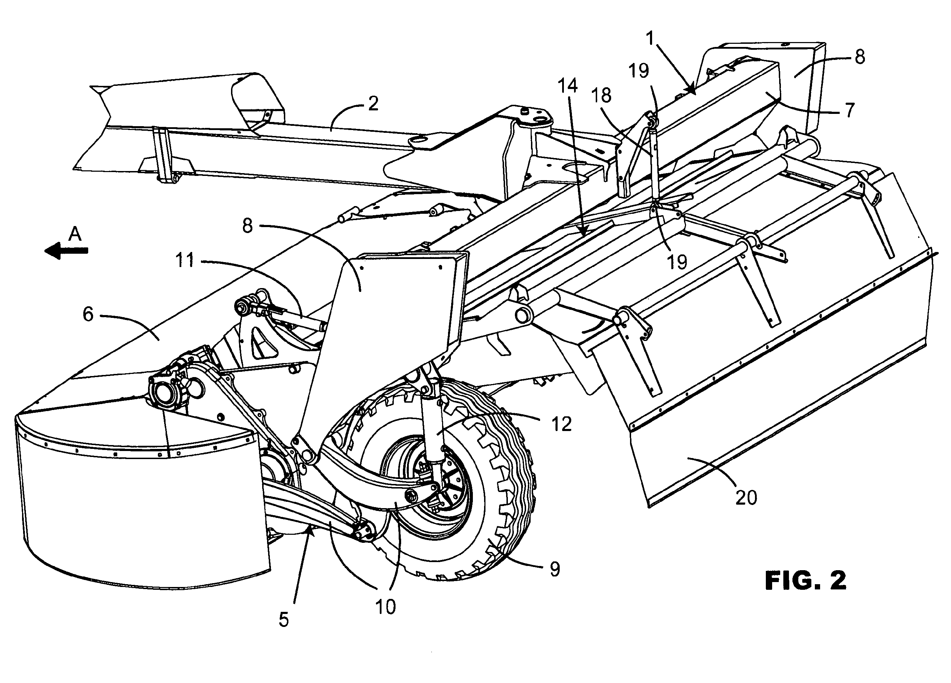

Tel que cela est illustré sur les figures 2 à 6, le tunnel d'éjection (14) est articulé avec le bâti au moyen d'une ou plusieurs bielles (18).

Selon l'invention, la bielle (18) est fixée par un côté sur une poutre transversale (7) constitutive du bâti (1), et relie par son autre côté la partie extérieure supérieure (15) du tunnel d'éjection (14).

Avantageusement la bielle (18) est munie à ses deux extrémités de rotules (19) pour assurer une articulation souple avec la poutre (7) du bâti (1), d'une part, et avec la partie arrière du tunnel d'éjection (14), d'autre part.

Les rotules (19) permettent un léger débattement, notamment latéral, ce qui évite les contraintes excessives sur les pièces et l'usure accélérée du matériel.

Selon l'invention la faucheuse-conditionneuse est ainsi caractérisée en ce que le carénage (13) est articulé avec le tunnel d'éjection (14) lui-même articulé sur le bâti (1).

Au moyen de ces deux articulations la partie avant comportant les outils de travail (3 et 4) peut se déplacer sans que la partie arrière du tunnel d'éjection (14) soit notablement affectée.

Selon l'invention le tunnel d'éjection (14) est muni dans sa partie terminale d'un déflecteur des végétaux (20) vers le sol dont la position reste sensiblement la même, que les outils de travail (3 et 4) soient en position relevée ou en position abaissée durant le travail.

Avantageusement selon l'invention le déflecteur de végétaux (20) comporte plusieurs panneaux reliés entre eux et orientés pour renvoyer les végétaux vers le sol.

Dans le déflecteur de végétaux (20) l'angle entre chaque panneau peut être ajusté de manière à orienter l'éjection des végétaux.

Plusieurs variantes sont possibles en ce qui concerne l'articulation (17) entre l'ensemble de travail et le tunnel d'éjection (14). Il est précédemment décrit de manière avantageuse un axe transversal (17) sur la largeur de la machine, il peut cependant être envisagé un autre type d'articulation, sensiblement au même endroit dans la machine, ou une articulation avec deux axes transversaux, ou encore un axe transversal sur une partie de la largeur de la machine, sans sortir du cadre de l'invention tel que défini par les revendications.

Concernant l'articulation (18, 19) entre la partie arrière et le bâti (1) il peut aussi être imaginé un autre type d'articulation et différentes variantes quant au positionnement de la bielle (18), quant à l'installation d'une deuxième bielle. Il peut aussi être imaginé d'autres interfaces que des rotules (19) pour former les extrémités de la bielle (18), sans sortir du cadre de l'invention tel que défini par les revendications.

Les moyens de relevage des outils de travail (3 et 4), les capteurs installés sur la machine, les outils portés par la barre de coupe (3) et le système de conditionnement (4) ainsi que les différents moyens de commande de la machine peuvent être très divers, et la faucheuse-conditionneuse de taille plus ou moins importante, sans sortir du cadre de l'invention.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Machine faucheuse-conditionneuse comprenant un bâti (1) portant un mécanisme faucheur de végétaux pourvu d'un dispositif de coupe (3), un système de conditionnement (4) des végétaux et des moyens (5) pour le relevage de ces éléments par rapport au bâti (1), cet ensemble de fauche et de conditionnement étant muni d'un carénage (13), ladite machine qui comporte en outre un tunnel d'éjection (14) des végétaux placé en continuité du système de conditionnement (4) et lui-même articulé par rapport au bâti (1), est ***caractérisée en ce que*** le carénage (13) est articulé avec le tunnel d'éjection (14) au moyen d'un axe transversal (17) qui est positionné dans la machine au-dessus et légèrement en arrière du système de conditionnement (4) des végétaux.

2. Machine faucheuse-conditionneuse selon la revendication 1, ***caractérisée en ce que*** l'axe transversal (17) est positionné dans la machine au niveau de l'entrée du tunnel d'éjection (14) et dans sa partie supérieure.

3. Machine faucheuse-conditionneuse selon la revendication 1 ou 2, ***caractérisée en ce que*** la dimension de l'axe transversal (17) correspond sensiblement à la largeur de la machine entre les roues (9).

4. Machine faucheuse-conditionneuse selon la revendication 1, ***caractérisée en ce que*** le tunnel d'éjection (14) est articulé avec le bâti (1) au moyen d'au moins une bielle (18) qui est fixée par un côté sur une poutre transversale (7) constitutive du bâti (1), et reliée par un autre côté à la partie extérieure supérieure (15) du tunnel d'éjection (14).

5. Machine faucheuse-conditionneuse selon la revendication 4, ***caractérisée en ce que*** la bielle (18) est munie à ses deux extrémités de rotules (19) pour assurer une articulation souple avec le bâti (1), d'une part, et avec la partie arrière du tunnel d'éjection (14), d'autre part.

6. Machine faucheuse-conditionneuse selon l'une quelconque des revendications précédentes, ***caractérisée en ce que*** le tunnel d'éjection (14) est muni dans sa partie terminale d'un déflecteur de végétaux (20) dont la position reste sensiblement la même que l'ensemble de coupe (3) et le dispositif de conditionnement (4) soient en position relevée ou en position abaissée au travail.

7. Machine faucheuse-conditionneuse selon la revendication 6, ***caractérisée en ce que*** le déflecteur de végétaux (20) comporte plusieurs panneaux reliés entre eux et orientés pour renvoyer les végétaux vers le sol.

8. Machine faucheuse-conditionneuse selon la revendication 7, ***caractérisée en ce que*** l'angle entre chaque panneau du déflecteur (20) peut être ajusté de manière à orienter l'éjection des végétaux.

## Patentansprüche

1. Mähknickzetter mit einem Gestell (1), das einen mit einer Schneidvorrichtung (3) versehenen Mähmechanismus für Pflanzen, ein Konditioniersystem (4) für die Pflanzen und Mittel (5) zum Anheben dieser Elemente in Bezug zum Gestell (1) trägt, wobei dieser Mähknickzetterzusammenbau mit einer Abdeckung (13) versehen ist, wobei die Maschine ferner einen Auswurftunnel (14) für die Pflanzen umfasst, der in Kontinuität mit dem Konditioniersystem (4) angeordnet und selbst bezüglich des Gestells (1) angelenkt ist, ***dadurch gekennzeichnet,* dass** die Abdeckung (13) an dem Auswurftunnel (14) mittels einer Querachse (17) angelenkt ist, die in der Maschine über und leicht hinter dem Konditioniersystem (4) für die Pflanzen positioniert ist.

2. Mähknickzetter nach Anspruch 1, ***dadurch gekennzeichnet,* dass** die Querachse (17) in der Maschine auf Höhe des Eingangs des Auswurftunnels (14) und in seinem oberen Teil positioniert ist.

3. Mähknickzetter nach Anspruch 1 oder 2, ***dadurch gekennzeichnet,* dass** die Abmessung der Querachse (17) im Wesentlichen der Breite der Maschine zwischen den Rädern (9) entspricht.

4. Mähknickzetter nach Anspruch 1, ***dadurch gekennzeichnet,* dass** der Auswurftunnel (14) an dem Gestell (1) mittels mindestens einer Stange (18) angelenkt ist, die mit einer Seite an einem Querträger (7), der Bestandteil des Gestells (1) ist, befestigt und mit einer anderen Seite am oberen äußeren Teil (15) des Auswurftunnels (14) verbunden ist.

5. Mähknickzetter nach Anspruch 4, ***dadurch gekennzeichnet,* dass** die Stange (18) an ihren beiden Enden mit Kugelgelenken (19) versehen ist, um eine flexible Anlenkung mit dem Gestell (1) einerseits und mit dem hinteren Teil des Auswurftunnels (14) andererseits zu gewährleisten.

6. Mähknickzetter nach irgend einem der vorhergehenden Ansprüche, ***dadurch gekennzeichnet,* dass** der Auswurftunnel (14) in seinem Endteil mit einem Pflanzenablenkblech (20) versehen ist, dessen Stellung im Wesentlichen dieselbe bleibt, egal ob die Schneidvorrichtung (3) und das Konditioniersystem (4) in angehobener oder in abgesenkter Stellung bei der Arbeit sind.

7. Mähknickzetter nach Anspruch 6, ***dadurch gekennzeichnet,* dass** das Pflanzenablenkblech (20) mehrere Platten umfasst, die miteinander verbunden und derart ausgerichtet sind, dass sie die Pflanzen zum Boden zurückkehren.

8. Mähknickzetter nach Anspruch 7, ***dadurch gekennzeichnet,* dass** der Winkel zwischen jeder Platte des Ablenkblechs (20) angepasst werden kann, um den Auswurf der Pflanzen auszurichten.

## Claims

1. Mower-conditioner comprising a frame (1) carrying a plant mowing mechanism provided with a cutting device (3), a plant conditioning system (4) and means (5) for lifting these elements relative to the frame (1), this mowing and conditioning assembly being equipped with a fairing (13), the said machine also including a plant ejection channel (14) positioned as an extension of the plant conditioning system (4) and itself articulated relative to the frame (1), ***characterized in* that** the fairing (13) is articulated to the plant ejection channel (14) by means of a transverse axis (17) positioned inside the machine, above and slightly behind the plant conditioning system (4).

2. Mower-conditioner according to claim 1, ***characterized in* that** the transverse axis (17) is positioned inside the machine at the inlet of the plant ejection channel (14) and in the upper part thereof.

3. Mower-conditioner according to claim 1 or 2, ***characterized in* that** the size of the transverse axis (17) essentially corresponds to the width of the machine between the wheels (9).

4. Mower-conditioner according to claim 1, ***characterized in* that** the plant ejection channel (14) is articulated to the frame (1) by means of at least one rod (18), which is fastened by one of its ends to a transverse beam (7) that forms part of the frame (1), and is connected by another end to the upper outer part (15) of the plant ejection channel (14).

5. Mower-conditioner according to claim 4, ***characterized in* that** the rod (18) is provided at its both ends with ball joints (19) to ensure flexible articulation to the frame (1) on the one hand and to the rear part of the plant ejection channel (14) on another hand.

6. Mower-conditioner according to anyone of the preceding claims, ***characterized in* that** the plant ejection channel (14) is provided at its end part with a plant deflector (20) whose position remains essentially the same whether the cutting device (3) and the plant conditioning device (4) are in the raised position or in the lowered position for work.

7. Mower-conditioner according to claim 6, ***characterized in* that** the plant deflector (20) includes several panels that are connected to each other and oriented so as to throw the plants back towards the ground.

8. Mower-conditioner according to claim 7, ***characterized in* that** the angle between each panel of the plant deflector (20) can be adjusted to orient the ejection of the plants.
